# EUROPEAN PATENT APPLICATION

(11) **EP 3 843 028 A1**
(43) Date of publication of application: **30.06.2021**
(21) Application number: 19219266.4
(22) Date of filing: 23.12.2019
(51) Int. Cl.: G06Q 50/30, G06Q 20/00, G07B 15/00

(54) **ITINERARY GENERATION APPARATUS, ITINERARY GENERATION SYSTEM, ITINERARY GENERATION METHOD AND COMPUTER PROGRAM PRODUCT**

(71) Applicant: Hitachi, Ltd., Tokyo 100-8280 (JP); HITACHI RAIL STS S.P.A., 16151 Genova (IT)
(72) Inventor: SAKIKAWA, Shuichiro, London, EC2Y 5AJ (GB); LI, Dong, London, EC2Y 5AJ (GB); MOFFA, Giulio, London, EC2Y 5AJ (GB); CHAN, Daniel, London, EC2Y 5AJ (GB); SUKEGUCHI, Satoshi, London, EC2Y 5AJ (GB); MOCHIZUKI, Tomoyuki, Tokyo, 100-8280 (JP); KOIWA, Hiroaki, Tokyo, 100-8280 (JP); YAMAGUCHI, Megumi, Tokyo, 100-8280 (JP); DE GRAZIA, Alessandro, 16151 Genoa (IT); FUSCO, Manlio, 16151 Genoa (IT)
(74) Representative: MERH-IP Matias Erny Reichl Hoffmann Patentanwälte PartG mbB

(57) **Abstract**

An apparatus 1100 for generating an itinerary a travelling object has travelled comprising an input unit configured to receive location information data 3001..300n from a mobile computer 1200 of said travelling object; an itinerary generation unit 1113 which is configured to generate itinerary history data 1105 including a plurality of itinerary subsection information data 6001..600n; and an output unit 1115 which is configured to output at least one itinerary of the travelling object based on the itinerary subsection information data 6001..600n and based on a weight value to the mobile computer 1200.

## Description

The present subject-matter especially relates to an apparatus and a system for increasing the reliability of generating/retracing an itinerary that a travelling object, in particular a person using a mobile computing device, has travelled. A corresponding method and computer program product are provided as well. The reliability is especially increased by an improved architecture of the apparatus and the system which can reduce data traffic, allows increased configuration flexibility, weight-based selected output as well as, especially, hardware fail-safe determination of itineraries. Further aspects which serve to increase the reliability synergistically will become apparent from the following.

Prior art, such as US 9996831 B2, describes an itinerary generation system which also allows automatic calculation of the fare of the itinerary. The system uses wireless transceivers installed at an entry and an exit of a vehicle, such as a train, a bus or the like. The entry transceiver receives data from a mobile computing device of a traveler wirelessly, indicating that a specific person has entered, when the traveler boards the vehicle. The exit transceiver receives data from the mobile computing device when the traveler leaves the travelling vehicle. The transceivers at the entry and at the exit transmit data to a server which uses the transmitted data to determine the itinerary of the traveler based on the entry and the exit data from the transceivers of the vehicle. Reliability of such systems may be affected, e.g., if a transceiver is out of order, communication between the mobile computing device, the transceiver and/or the server is interrupted or the like.

It is the technical object to provide a more reliable apparatus and system which are configured to determine an itinerary a travelling object has travelled as well as a corresponding method and computer program product.

According to the subject-matter set forth in the appended claims, there is proposed an apparatus for generating an itinerary a travelling object, such as a person or user of a mobile computing device, has travelled. The apparatus is preferably located in a remote server or it can be a remote server, wherein the expression "remote" may mean that the server is located distant from the travelling object or the mobile computing device (mobile computer). The mobile computing device or mobile computer may be a smartphone, a tablet, a laptop, a smartwatch or the like.

The apparatus may include an input unit which may be configured to receive location information, in particular location information data, which may contain data about a location of the mobile computer and a time at the respective location. The location information data, in other words, may include a time stamp. The plurality of location information data received during the journey of the travelling object may be recorded in a database which is preferably stored in the apparatus. The database may have a data structure such as an array or table and the location information may be recorded therein as data entry/entries. The entirety of location information data may be named "location history data" in the following.

The apparatus may further comprise an itinerary network database. The database preferably includes a data structure, such as a table, an array or any comparable data structure with data values entered. The database may include a weight information, such as a weight value or data about a weight. Preferably a weight value is preset for each of a plurality of predetermined itinerary subsections stored in the itinerary network database. As mentioned above, subsections may, if combined, result in an itinerary or a single subsection may result to be an itinerary, e.g. depending on the number of subsections.

Further, an itinerary generation unit of the apparatus may be configured to generate itinerary history data including a plurality of itinerary subsection information data. Said data is again preferably stored in a data structure such as an array, a table or the like, wherein each itinerary subsection information data includes a start and an end location of a subsection of an itinerary determined based on the location history data and an estimation value determined based on the weight value from the itinerary network database. The entirety of itinerary subsection information data is divided in entities of itinerary subsection information data so that, if a "single" or "each" itinerary subsection information data is mentioned, it may specify one specific entity thereof. In other words, each itinerary subsection information data comprises a (predefined) set of values or, in even other words, a list of predefined types of values, such as the above described types "start location", "end location", and the like.

Further, the apparatus may include an output unit which may be configured to output at least one itinerary based on the itinerary subsection information of the itinerary history data and based on the weight value to the mobile computer. The expression "... based on ..." shall especially encompass "... selected for output based on ... ". The input unit may be combined with the output unit or it can be a separate unit.

The term itinerary may also be understood to encompass "travelling route" or "transportation route". The term "subsection" may also be understood as "link", which may be also used in the following. As mentioned above, an itinerary may include one or more subsections. A single subsection may also be an itinerary, in particular and, e.g., if an itinerary has exactly one subsection. In other words, each subsection may be an itinerary or may be output as an itinerary. Multiple itineraries may be output as well. Especially preferably, the output of the output unit includes one or more subsections of the itinerary which in combination may result to be the complete/overall itinerary/travel/journey of the travelling object.

The above described apparatus is enabled to generate or, in other words, reconstruct/reproduce/retrace, an itinerary a travelling object has travelled. The travelling object may preferably be a person. Technically beneficially, especially in view of reliability, the apparatus may communicate directly and wirelessly with a mobile computer of the travelling object from which the data is received that is used to generate the itinerary. There is no need to provide entry or exit transceivers in between of the communication path which may malfunction. Moreover, this increases safety of data transmission.

In addition, the output to the user of the mobile computing device is more reliable because a weight value is used for determining the itinerary(-ies) output to the mobile computing device. This helps to avoid that implausible or incorrect itineraries are output which also reduces data traffic. With regard to the latter, in other words, the data traffic is reduced because only the most plausible, reliably determined itineraries are sent from the apparatus to the mobile computer.

Further, preferably, each location information data may include information/data about an identifier of the mobile computer, a location of the mobile computer and a time of the mobile computer at said location. The information/data about the location of the mobile computer and the time at the location may be generated based on a signal transmitted from a sender node at said location to the mobile computer wirelessly. The sender node may be called "beacon" or "sending node" in the following. The sender node preferably transmits data unidirectional to the mobile computer. Furthermore, the sending node can have an encryption function and encrypts at least a part of data transmitted to the mobile computer by such function. Here the decrypting function can be managed both locally in the mobile computer and within the database, the apparatus allow the mobile computer to transmit data provided from the sending node but drastically decrease potential of being made falsification.

The reliability of the apparatus is further increased because the location information data requires only a minimal data size to be transmitted from the mobile computer of the travelling object to the apparatus. This reduces data traffic and/or data transmission duration and thus improves the reliability that the data can be received at the apparatus at any time. Furthermore, in addition to the before discussed technical advantage that the mobile computing device directly (if especially the wireless/wired network transport and its subcomponents are not taken into account) communicates with the claimed apparatus or its input unit, respectively, it should be noted that the beacons communicate in a unidirectional manner with the mobile computing device of the travelling object. Hence, preferably, only one bidirectional communication path is necessary, which is the path between the mobile computing device and the apparatus.

Further, preferably, the itinerary generation unit may be configured to select a first location information (data) with a lowest time from the location history data (which may be structure as a table or the like), to set the location of the first location information (data) as a start location (or "start point"), to select a second location information (data) with the next lowest time and with a different location than the assumed (set) start location from the location history data, to set the location of the second location information (data) as an end location, and to save said start location and said end location as a part of itinerary subsection information data of the itinerary history data. "A part" of the information/data shall indicate that the itinerary history data may preferably include additional information or data added thereto by way of different routines/units or the like. The above described may be performed in a loop until all entries/records in the location history data are processed, which may mean that, after a start and an end location are determined, a "new" first location is picked as a "new" start location and so on. Each itinerary subsection information data is preferably generate by one loop. In other words, preferably one entry with a set of itinerary subsection information data is generated by one loop and the next entry is generated in the next loop.

The above synergistically adds to the improved reliability of the apparatus that the loop may be carried out until a "different" location, i.e. different to the start location, is detected in the location history data. Most preferably, the location history data includes data which is ordered in accordance with time, indicated by the time stamp, starting at the earliest time recorded. Thus, an end location can be determined efficiently with regard to the computational effort and reliably with regard to avoiding incorrectly picked start or end locations. Such assembled itinerary history data is preferably saved in the form of a table, an array structure or the like.

Further, preferably, the apparatus may include an itinerary estimation unit configured to generate, based on information from the itinerary network database, additional itinerary history data including one or more alternative itinerary subsection information data (or sets/entries thereof), being alternative information to the itinerary subsection information generated by the itinerary generation unit. Preferably the alternative itinerary subsection information data is generated for (an entry/set of) itinerary subsection information data among the itinerary history data generated by the itinerary generation unit which have an estimation value that is lower than a predetermined threshold. In other words, the apparatus may check the itinerary subsection information data created by the itinerary generation unit with regard to their estimation value and the itinerary estimation unit may provide alternative entries, i.e. alternative itinerary subsection information data, preferably only for those which have an estimation value lower than the preset threshold. The threshold may be stored in a storage of the apparatus and may be set once the apparatus is put into service.

The above synergistically adds to the improved reliability of the apparatus in that it adds a further unit that is enabled to add further subsections of an itinerary of the travelling object for rendering the apparatus fail-safe especially against communication malfunctions, mobile device malfunctions or beacon malfunctions or the like. More specifically, while the itinerary generation unit determines information about subsections based on actually transmitted location information, i.e. data indeed transmitted from the mobile computing device, the itinerary estimation unit may determine further/alternative subsections which are not (necessarily) (directly) based on transmitted location information. For example, it may be possible to travel from a start location to an end location by different travelling vehicles or via different/additional subsections, and, if, for example, some location information was not properly transmitted to the apparatus while travelling on a subsection, an incorrect itinerary may be determined if only the actually received location information was considered by the itinerary generation unit. However, the itinerary estimation unit allows taking into account further possible alternative subsections and/or itineraries between the start location and the end location which may have been correctly determined without a malfunction of a sender node or the like. Among the multiple options it is then possible to select the correct or most-likely correct subsection based on the weight value assigned to each itinerary subsection information data. The computational effort may be moreover reduced if using the estimation value and comparing it against the predefined threshold so that the itinerary estimation unit may only start working when an estimation value of specific itinerary subsection information data is lower or equal to the threshold.

Further, preferably, the itinerary network database may comprise a plurality of predetermined itinerary subsections each of which including a start location, an end location and weight information/value. Moreover, the itinerary generation unit may be configured to select weight information from the itinerary network database for itinerary subsection information data for which the start location and the end location match with the start location and the end location of a predetermined itinerary subsection in the itinerary network database. Preferably, the estimation value of said itinerary subsection information data may set to be the same as the selected weight information. This allows efficient and reliable determination of weight information and of an estimation value.

Further, preferably, the itinerary estimation unit may be configured to add alternative itinerary subsection information data to the itinerary history data by selecting one or more predetermined itinerary subsections from the itinerary network database for which at least the start location or the end location of said itinerary subsection information data generated by the itinerary generation unit, which has an estimation value that is lower than a predetermined threshold, and of a predetermined itinerary subsection of the itinerary network database match with each other, and if the weight of the alternative itinerary subsection is equal or higher than said threshold. The threshold may be preferably identical with the above described threshold.

As mentioned before, the reliability of the apparatus with regard to malfunctions or the like, i.e. the fail-safety, can be increased by providing the itinerary estimation unit which allows, according to the immediately before described preferred aspect, to add alternative itinerary subsection information data to the itinerary history data which is specifically selected based on the described threshold comparisons. The approach using the threshold comparison(s) can reduce the number of alternative selections so that the computational effort is reduced in addition to the improvement of reliability. Again, by adding additional possible subsections/itineraries it becomes possible to counteract malfunctions with regard to the incorrect/incomplete/non-existent transmission of data to the apparatus.

Further, preferably, adding to the improvement of reliability, the itinerary generation unit and/or the itinerary estimation unit may be configured to add information about a property to the itinerary subsection information data, and in particular the itinerary generation unit may set "actual" as property data while the itinerary estimation unit may set "assumption" as property data. This helps reliably identifying/separating itinerary subsections information which are based on directly transmitted information/data and which are based on the addition of alternatives provided by the itinerary estimation unit. Further, accordingly, the output unit may be configured to output itinerary subsection information from the itinerary history data as "confirmed itinerary" or as "alternative itinerary". An alternative itinerary output may be an itinerary subsection information (or a plurality thereof) which includes an alternative to an itinerary subsection information of the itinerary history data which has the same start and/or end location.

Further, preferably, the output unit may be configured to output at least one itinerary subsection information data from the itinerary history data as a proposal itinerary to the mobile computer, and the input unit may be configured to receive feedback information/data from the mobile computer about the agreement (of the travelling object) to the proposal itinerary. If the feedback includes agreement, the weight in the itinerary network data may be increased for the predetermined itinerary subsection matching with the proposal itinerary, and, otherwise, said weight may be decreased. The feedback improves the reliability and accuracy of the output of the apparatus over time because the weight values stored in a database of the apparatus or at any other location can become more precise over time, i.e. the optimal weight value can learned over time. The apparatus may preferably further include a database with personal weight values of different users so that the learning can be personalized.

Further, preferably, an alarm unit may be included in the apparatus configured to verify feedback information for a proposal itinerary which does not receive agreement, and to increase the weight of the predetermined itinerary subsection matching with the proposal itinerary if the verification determines an agreement as correct. This helps reliably identifying and ignoring false feedback.

Further, preferably, the weight value may be set modified/updated/changed based on different factors, parameters or circumstances. For example is may be based on a distance between a start location and an end location, e.g. a longer distance may decrease the weight for a direct connection between two locations by foot or by bicycle if a bus or a train commutes between the two locations. Further, the weight may consider the number and kind of travelling options between a start location and an end location, the weather, and other circumstances, such as technical malfunctions of public transportation systems reported to the apparatus, or the like. For example, it may be likely that a bicycle is used for a short distance between two locations even though there is a bus connection. This would mean that the weight of the connection by bus has a lower weight than the direct connection by bicycle. However, on rainy or cold days the likelihood may be higher that the bus is taken instead of the bicycle. Then, the weight of the bus connection would be updated to be higher. The weights may be stored in a database on the apparatus, the mobile computing device or any other device connected to the apparatus. The updating may be performed in regular intervals or triggered by outer circumstances, such as change of weather.

Even further, the apparatus may include a fare database and a fare calculation unit which may be configured to calculate a fare for each itinerary subsection information in the itinerary history data based on the information in the fare database. Then, the apparatus may output an itinerary and a fare for each itinerary output.

In addition, a system may be provided which includes the apparatus according to at least one of the before explained aspects, a mobile computer and a plurality of sender nodes arranged along the travelling routes and/or within transportation vehicles, wherein the sender nodes may have a predefined sending range within which they send data, e.g., location and time information, to a mobile computer of a travelling object. The sender nodes preferably send data unidirectional only to the mobile computing device/mobile computer while the latter may communicate bidirectional with the apparatus. This system architecture is especially fail-safe, thus reliable, data protective and reduces data traffic in general.

Further, there is claimed a method for generating an itinerary a travelling object has travelled. The method may include the steps: receiving location information data from a mobile computer of said travelling object, wherein the location information data contain information about a location of the mobile computer and a time at said location, and storing a plurality of the location information data as location history data; generating itinerary history data including a plurality of itinerary subsection information data, wherein each itinerary subsection information data includes a start and an end location of a subsection of an itinerary determined based on the location history data and an estimation value determined based on a weight information from an itinerary network database; and outputting at least one itinerary based on the itinerary subsection information data of the itinerary history data and based on the weight information to the mobile computer.

In addition, the above method may further include additional steps based on the configurations of preferred aspects described above in connection with the claimed apparatus. For example, adding itinerary subsection information by way of using the location information, adding alternative itinerary subsection information and/or adding properties thereto as well as proposing itineraries, adapting the weight information based on feedback from users or based on, e.g., external conditions, such as weather or the like. Also the claimed method may further include a fare calculation step. In other words, each configuration of the claimed apparatus shall also be encompassed by way of a method, which may be claimed by itself and/or by way of a computer program product claim.

Summarizing, a solution is provided which offers technical benefits especially with regard to the reliability of automated itinerary generation.

In the following the claimed subject-matter will be further explained based on at least one preferential example with reference to the attached drawings, wherein:
- Figure 1: shows a schematic overview of an example for a system which uses an apparatus for generating an itinerary;
- Figure 2: shows an example for a setup of an apparatus and a mobile computer communicating with each other via a data connection;
- Figure 3: shows an example for a table including location translation data;
- Figure 4: shows an example for a table including location information data;
- Figure 5: shows a schematic example for a travelling route including links/subsections and nodes;
- Figure 6: shows an example for a table including predetermined itinerary subsections (Fig. 6a) and an example for a table including itinerary history data (Fig. 6b);
- Figure 7: shows an example for a table including fare values (Fig. 7a) and an example for an output of an output unit displayed on a mobile computer (Fig. 7b);
- Figure 8: shows a flowchart of an example of steps performable by an itinerary generation unit;
- Figure 9: shows a flowchart of an example of steps performable by an itinerary estimation unit;
- Figure 10: shows a flowchart of an example of steps performable by an output unit;
- Figure 11: shows a flowchart of an example of steps performable by an itinerary network update unit; and
- Figure 12: shows a flowchart of an example of steps performable by an alarm unit;

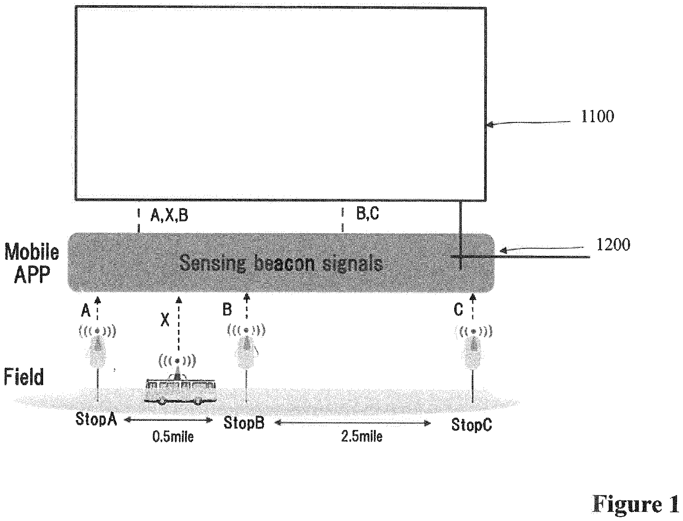

Fig. 1 shows a very schematic overview of the claimed system 1000 in which three locations are marked as "stop A", "stop B", "stop C". A transportation vehicle, such as a bus, is shown travelling between the stops and distances between the stops A and B and the stops B and C are indicated. Here, the first mentioned distance shall be 0.5 miles, while the second mentioned distance shall be 2.5 miles. The distance values are only examples and can be completely different. Each of the stops as well as the bus holds at least one sending node N, for which the expression "sender node" or "beacon" may also be used in the following. A mobile computing device/mobile computer 1200 is travelling together with a travelling object. The expression "travelling object" shall, for example, identify a travelling person or a travelling user of the mobile computer 1200. It is assumed that the user of the mobile computer 1200 carries the mobile computer 1200 while travelling along the stops A to C. The stops do not have to be linked to real stops of the bus. While travelling, the mobile computer 1200, especially a mobile computer program (or "application program" or briefly "App" or "mobile app") is configured to receive data sent from a sender node N to the mobile computer 1200. The received data originates from a sender node N that is within the range of transmission thereof. A preferred range of transmission of the sender nodes N may be some meters or less than one meter. The relatively short transmission range ensures that an overlapping of different sender nodes N can be avoided or reduced. Since the transmission range is preferably rather short, it may be necessary to provide more than one sender node N in a space which is larger than the transmission range, such as the bus shown in Fig. 1, in order to ensure full coverage. As soon as the mobile computer 1200 of the travelling object is in the transmission range, time stamped location data, which is named location information data 3001-300n, is transmitted from the sender node N to the mobile computer 1200. The location information data 3001-300n may include information about a location of the mobile computer/the sender node N and a time at which the data was transmitted to the mobile computer 1200. The received location information data 3001-300n may either be stored in the mobile computer 1200 temporarily or is may be directly transmitted to a remote server, which is or includes the server/apparatus 1100. A mixture of both options, i.e. sending immediately or storing and sending after a set time, can be provided as well. While, in this example, the travelling object and the mobile computer 1200 move along the route from stop A to stop C, the mobile computer 1200 will pass different sender nodes N and, hence, it will (subsequently) receive location information data 3001-300n therefrom. This continues until a (temporary) final stop has been reached. If the data is not directly sent, as discussed before, a further preferred option includes sending data from the mobile computer 1200 to the apparatus 1100 on the remote server after completion of the travelling/journey. Completion of the journey may, for example, be indicated by the travelling object entering a certain command into the mobile computer 1200 or into the related computer program running on the mobile computer 1200. The final destination of the journey may also be known to the mobile computer 1200, e.g. because it was entered by the user, and, then, no command for indication the completion of the journey is necessary.

The specific processing of the location information data 3001-300n received at the apparatus 1100 will now be discussed in greater detail and with regard to the following Figures.

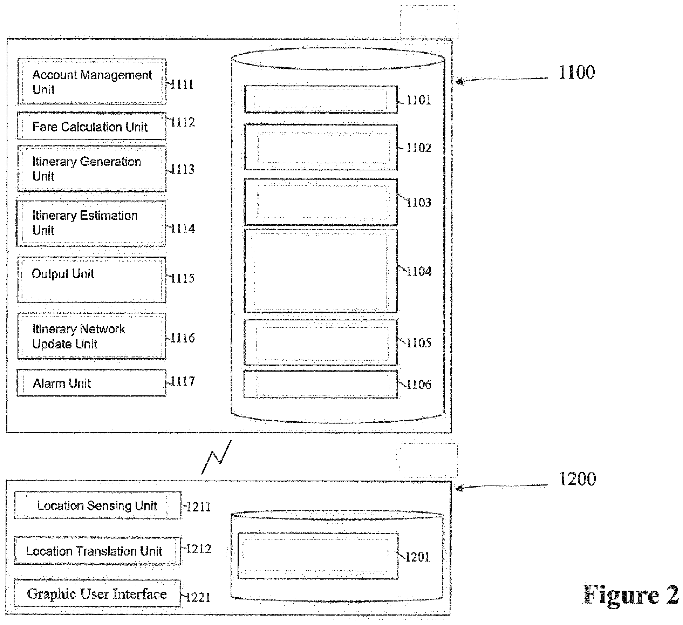

Fig. 2 shows a schematic configuration of the apparatus 1100 and the mobile computer 1200. The apparatus 1100 may be a (remote) computing device or the like, for example it may be a server or a computing device on a server. While Fig. 2 displays a plurality of different sub-units and data storage unit(s) (including databases or the like) of the mobile computer 1200 and the apparatus 1100, it should be noted that some of these can be optional which will be discussed during the further description of the Figures.

Fig. 2 shows that the mobile computer 1200 and the apparatus 1100 are connected via data connection (indicated in Fig. 2 by the zigzag line in between the two devices) which is preferably bidirectional and wireless. Preferred options for configuring the wireless data connection between the two entities/devices can include all relevant wireless data transmission protocols. One specific preferred option is a connection via the internet. The mobile computer 1200 includes a graphic user interface 1221 for displaying relevant information to the travelling object, e.g. the user of the mobile computer 1200. Further, it includes internal and/or external storage unit(s) 1201 for, among others, storing location translation data in a database which is preferably structured as a table or an array or the like. Furthermore, the mobile computer 1200 can include a location sensing unit 1211 and a location translation unit 1212. The mobile computer 1200 preferably is a smartphone, a tablet, a smart watch, a laptop, or any other portable computing device. Some of the before mentioned units of the mobile computer 1200, such as the location translation unit 1212, may be realized as a computer program product and/or as a combination of hardware and software. The location sensing unit 1211 for example may include a hardware sensor and a software program which processes the data from the sensor.

Further, with regard to Fig. 1, it was explained that the sender nodes N transmit the location information data 3001-300n to the mobile computer 1200. In said before described preferred aspect, the location sensing unit as well as the location translation unit 1211 and 1212 and the location translation data 1201 are not necessary, because the therein computed data can be provided by the sender node N as discussed in regard of Fig. 1. In a different preferred aspect, however, the before mentioned units are present in the mobile computer 1200 and, in this case, the sender node N merely transmits a sender-specific call sign, such as A1, A2, X1, ..., C1, C2, to the mobile computer 1200. Then, the mobile computer 1200 links the call sign submitted by the sender node N with a location, such as station A, on-board of a bus, station C and the like, by means of the location translation unit 1212. Further, the location sensing unit 1211 identifies coordinates if necessary and the mobile computer 1200 may add a time stamp at the moment of reception of data from the sender node N. Irrespective of the before discussed preferred aspects, the location information data 3001-300n is transmitted to an input unit of the apparatus 1100 (the input unit in this example is combined with the output unit) and the received location information data 3001-300n is stored as location history data 1102 in a respective storage of the apparatus 1100. Especially, it is stored in a database or the like which may be structured as a table or any other kind of data format. Preferably, the transmission from the mobile computer 1200 to the apparatus 1100 further includes an identifier ID of the mobile computer 1200 and/or the user of the mobile computer 1200. The identifier may be added to the location information data 3001-300n.

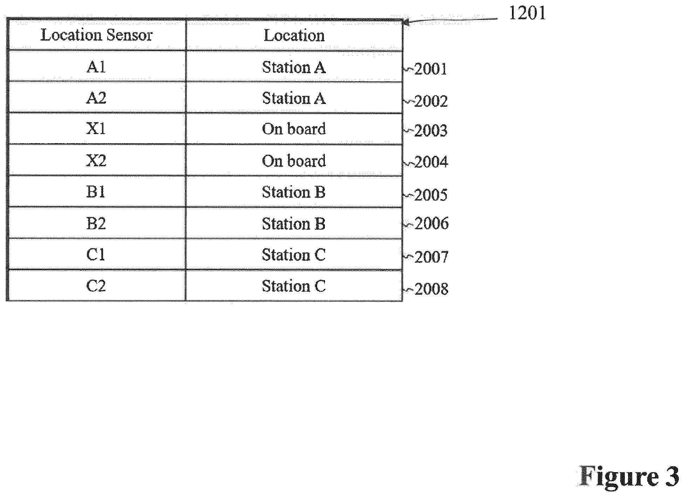

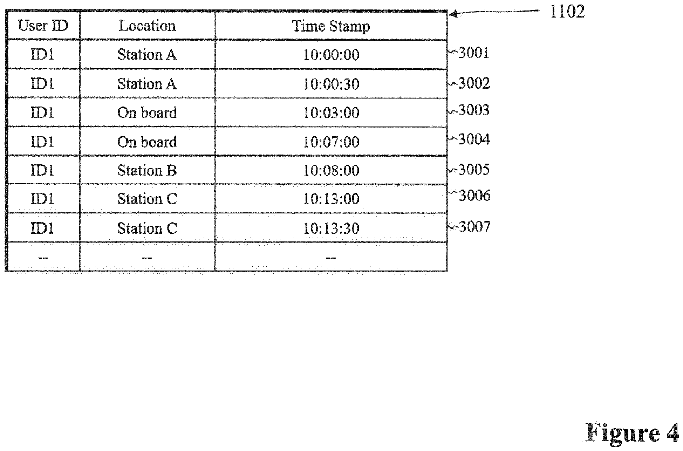

Figs. 3 and 4 show an example for a data structure of location translation data 1201 from which it is apparent that each line identifies a different sensor/sender node N, which are listed in a first column while the corresponding locations are listed in a second column. Each of the lines marked by reference signs 2001-2008 represents a single location translation information (data) or, in other words, a set thereof. The same applies to the example of a table including location history data 1102, as shown by Fig. 4. Each location information data 3001-3007 shown includes values for the identified user ID, the location, and the time at the location. For example, the location information data 3002 indicates that the user with identifier "ID1" has been at station A at 10:00:30 AM. The same user has been at station C at 10:13:00 AM, as shown by location information 3006.

Back to Fig. 2, it is also shown a data storage for account data 1101 which includes data about each user and relates a user ID to a specific user. The data about each use may include information such as the home address, credit card information, bank information, and the like. Transmissions incoming at the apparatus 1100 from different mobile computers 1200 can be assigned to the correct person by using the identifier/user ID information. Furthermore, the storage of the apparatus 1100 may at least furthermore include a database for itinerary network data which may also be ordered in the form of an array, a table or any other suitable data format.

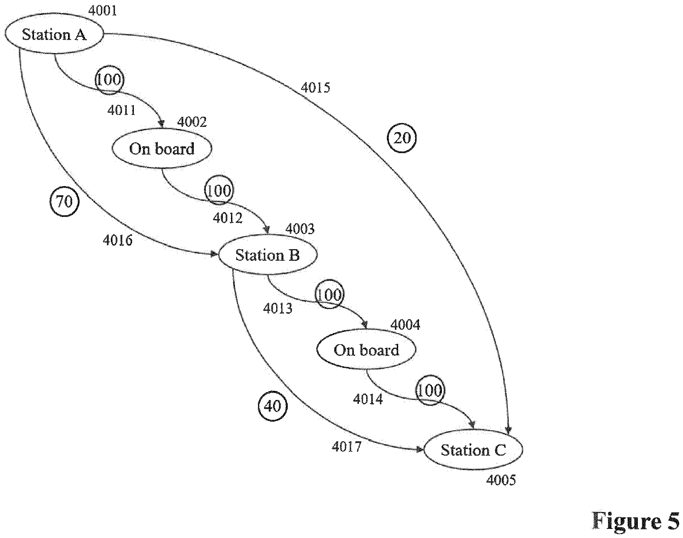

Fig. 5 graphically visualizes an example for data stored in the itinerary network database which will be explained in the following. However, it is to be noted that this is only an example and the itinerary network database may include far more complicated travelling route data predefined and stored in the apparatus 1100. Further it is to be noted that the apparatus 1100 may include the data stored in advance. However, the data can be updated/amended at any time if necessary. As one can see, Fig. 5 displays the data by way of nodes and links. The nodes correspond to the before described stations/stops or other points along a travelling route of a travelling object. In this example, specifically, the nodes include the before discussed stations A to C as well nodes for a transportation vehicle connecting the stops A to C. Further, the example shows subsections/links between the nodes. The nodes corresponding to the transportation vehicle are marked as "on-board". Nodes may especially indicate locations where a passenger may get on and/or get off a transportation vehicle and locations where he/she is on-board of a vehicle/transportation vehicle. Links preferably express a transportation route connecting the locations which may also be called a "subsection of an itinerary". Each subsection/link has a direction and a weight value. The direction, which is an optional value, identifies a travelling direction from one node to another node, while the weight value indicates a possibility whether a passenger/travelling object will choose a specific link/subsection. One can realize from the example in Fig. 5 that there are links between the nodes "station A", "on-board" and "station B" marked by reference signs 4011 and 4012. Further there are links for "station B" to "on-board" and "on-board" to "station C" indicated by reference signs 4013 and 4014. These links have a weight value of "100". The value may have no unit. Preferably the values indicate a percentage value. The stations and "on-board" nodes have the reference signs 4001-4005 in this example of Fig. 5. Additional links/subsections between the nodes are available. One of the additional subsections connects the node "station A" with the node "station C" and it has the reference sign 4015 and the weight value "20". Furthermore, a direct connection between station A node and station B node having reference sign 4016 has the weight value "70", and the direct connection/link/subsection between station B and station C has reference sign 4017 and the weight value "40". One can now consider that, looking at the example of Fig. 5, the highest probability for a travelling object to travel from station A to station C will be on-board of the transportation vehicle(s), such as a bus, which connect(s) station A with station B and station B with station C. The reason is that all links/subsections in between the before mentioned stations have a weight value of "100". In other words, it is, for example, rather unlikely, compared to taking the bus from A to B and from B to C, that the travelling object will travel from station A to station C by foot or bicycle which has the weight value "20". The same holds true for any other connection from station A to station C which means that it is likely that the travelling object choses the before discussed itinerary by bus.

It is further to be noted that the assigned weight values can be modified/updated over time and/or in connection with certain circumstances. For example, if it is brought to the attention of the system that the transportation vehicle between station A and station B has a technical failure, the weight values for the subsections 4011 and 4012 may be decreased below the weight value for the subsection/link 4016. Further, if the weather is extremely good and the distance between two nodes is rather short, the weight value for taking this link/subsection by way of walking by foot or riding the bicycle may increase and may be higher than for the public transportation vehicle, such as the bus or subway. Further possibilities of modifying/updating the assigned values of the weight values will be discussed in the description below.

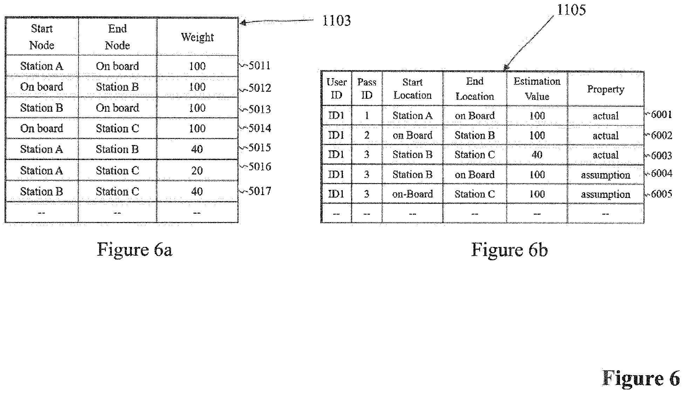

The before discussed network shown by Fig. 5 may be stored in the apparatus 1100 as a data table for which an example is shown in Fig. 6. Specifically, the itinerary network database 1103 shown in Fig. 6 includes predetermined itinerary subsections 5001-500n in each line, wherein the specific example of Fig. 6 uses reference signs 5011 to 5017 and the first column indicates the start node of the predetermined itinerary subsection, the second column indicates the end node thereof and the third column the assigned weight value. The weight values shown in Figure 6 may be the initially predefined values which may be adapted over time. In this connection a further preferred option is shown by Figure 2 which comprises a database with individual data 1104 of a travelling object. Each registered travelling object may have its own individual data 1104. The individual data 1104 may preferably include updated/modified weight values which were learned by the apparatus 1100. For example, if a travelling object, in the past, has preferred the link 4016 of Figure 5 over the bus corresponding to links 4011 and 4012, the apparatus 1100 may learn that this specific travelling object, identified by its ID, prefers the link 4016 and thus the predefined (general) weight values for links 4011 and 4012 may be reduced to be lower than the weight value of link 4016. Of course, the weight value of link 4016 may be increased conversely for achieving the same effect. Consequently, by learning individual preferences, the accuracy of the itinerary generation can be improved even further and a personalized output can be ensured.

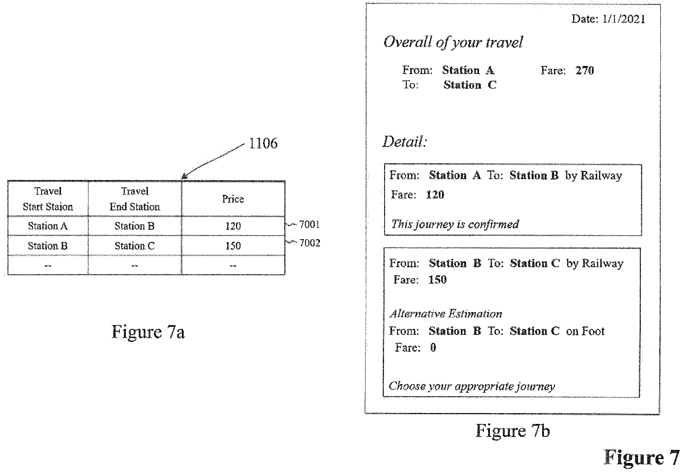

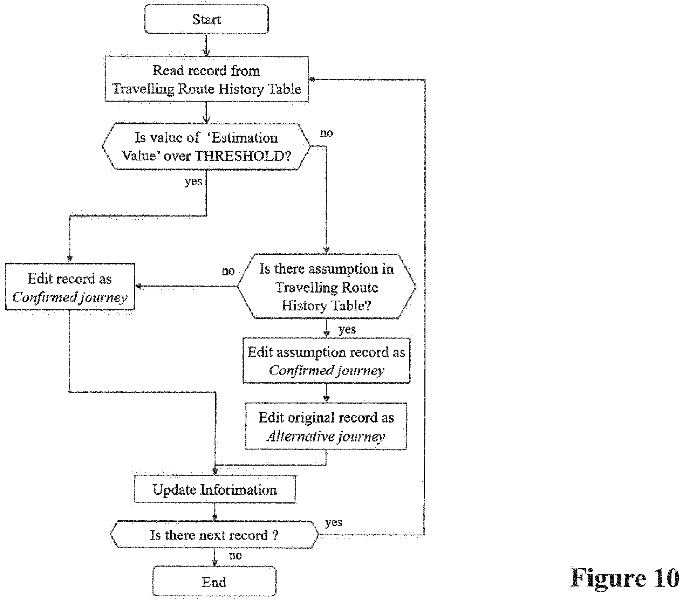

Furthermore, the apparatus 1100 includes an itinerary generation unit 1113 of which an example of operations/method steps which can be carried out by said unit 1113 is shown by Fig. 10. Specifically, the itinerary generation unit 1113 is configured to generate itinerary history data 1105 which are stored in the apparatus 1100 in a respective database, again preferably having a data structure of a table, an array, or the like. Fig. 7 shows an example of the itinerary history data generated by the itinerary generation unit 1113. Specifically, Fig. 7 shows a table of itinerary history data 1105 which includes a plurality of itinerary subsection information data 6001-600n. In the example of Fig. 7, five different itinerary subsection information data (in other words: itinerary subsection information data sets) are shown having reference signs 6002 to 6005. The itinerary subsection information data 6001-600n, in the example of Fig. 7, each include the user ID and optionally, a pass ID. Further, each of the itinerary subsection information data 6001-600n includes a start location, an end location, an estimation value, and in preferred aspects, also a property value. Each line of the table according to Fig. 7 shows one (set of) itinerary subsection information data 6001-600n which are preferably generated by a looped processing of the steps shown by Fig. 10.

Fig. 10 especially shows that the itinerary generation unit 1113, in a first step S1, reads a first record from the location history data 1102 of Fig. 4. According to the example of Fig. 4, the first value read in a first processing loop of the steps according to Fig. 10 would be the location information data 3001 indicating a user with an ID1 who was at station A at 10AM. A temporary variable or the like (named "check point" in the Figure) memorizes this first record as a start point (step S2) and the next record is read (step S3) from the location history data 1102. This is the location information data 3002 in the example of Fig. 4. Subsequently, it is checked (step S4) whether the temporarily saved start point is the same, i.e. the locations of data 3001 and 3002 are compared with each other. If they are identical, the next record is read following the "yes" path in Fig. 10. For example, the two first entries of Fig. 4, namely location information 3001 and 3002, include the same entry so that the comparison in Fig. 10 would return "yes". However, the next record, which is location information 3003, including the entry "on-board" is different from the start point ("station A") so that the next comparison would return "no" as result. If "no" is returned, an end point is set (step S5). In this example it would be in accordance with the location entry of location information 3003 being "on-board". Subsequently, the start location and the end location of the first generated itinerary subsection information data 6001-600n (in the above example it would be the itinerary subsection information data 6001 of Fig. 7), is determined and entered into itinerary history data 1105. Furthermore, the user ID is known and the estimation value has to be added. The estimation value is determined by the step S6 of Fig. 10 which includes reading the weight value for an identical predetermined itinerary subsection, wherein identical means that the start location and the end location of the itinerary subsection information data 6001-600n is equal to the start node and the end node of the itinerary network database including the predetermined itinerary subsections 5001-500n. In the present example, the itinerary generation unit 1113 would determine the weight value from the itinerary network database 1103 using the first entry of the itinerary database 1103 being the predetermined itinerary subsection 5011 which includes a weight value of "100" for a start at station A and an end at "on-board". This weight value of "100" is recorded as estimation value "100" into the itinerary subsection information data 6001-600n. Then the first loop of the steps as shown in Figure 10 is complete as soon as the new record, i.e. one (set of) itinerary subsection information data 6001-600n, is entered into the itinerary history data 1105 (Step S7). In the next loop, if there is a next record (steps S8, S9) in the location history data 1102, an additional record is generated for the itinerary history data 1105. Therefore, the next unread/unprocessed entry of the location history data 1102 is selected. In the example discussed above, the next entry would be location information 3004 including the location "on-board" at 10:07:00 AM. The ID of the user as well as the location is memorized, wherein the location is memorized as a start point and the procedure as discussed before with regard to Fig. 10 is repeated so that, in this example, the next end point would be found for a location information 3005 with location "station B" reached at 10:08:00 AM. The weight for the respective itinerary subsection information data 6002 would be again taken from the table as shown by Fig. 6 relating to the predetermined itinerary subsection 5012 having the weight value "100" as well. Therefore, the estimation value "100" is set and the entry 6002, i.e. the second itinerary subsection information data, is entered into the itinerary history data 1105, as shown by Fig. 7. The above is carried out in a loop until no further location history data 1102 is available anymore. In the discussed example the last itinerary subsection information data 6001-600n would be the data (set) having reference sign 6003 in Fig. 7.

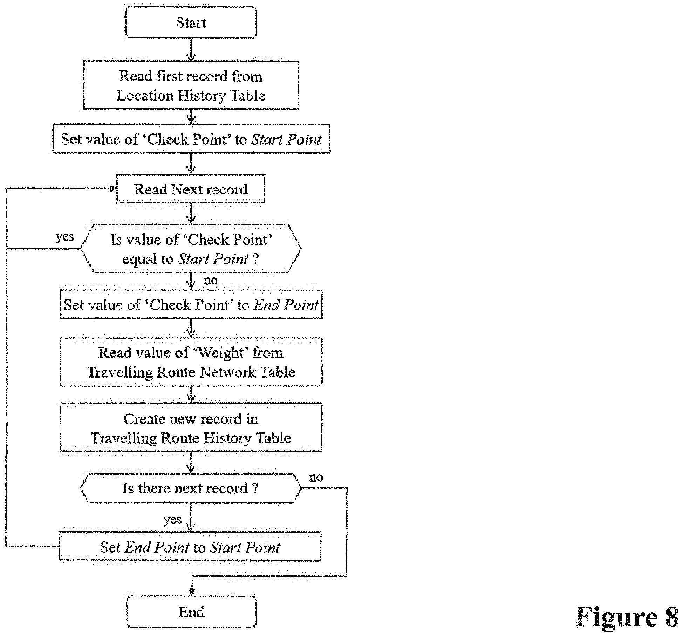

If it would be assumed that all data was reliably transmitted and saved in the location history data 1102, the above three itinerary subsection information data 6001-6003, shown by Fig. 7, would be output by an output unit 1115 as aggregated itinerary, itineraries or as subsections of one itinerary. Furthermore, a fare calculation unit 1112, which may be added to the apparatus 1100, could make use of a fare database as shown in Fig. 2 having reference sign 1106 and for which an example is shown in Fig. 8. In the fare database, each subsection/link can be assigned with a price which could be indicated and/or charged to the travelling object. In the present example, taking the transportation vehicle from station A to station B would amount to a price of 120 and taking it from station B to station C would amount to a price of 150. That means, in the above discussed aspect and example of the claimed matter and based on the itinerary subsection information data 6001-6003 as shown by Fig. 7 generated by the itinerary generation unit 1113, a price of 120 may now be outputted for the travelling from station A to station B on board of a transportation vehicle, as it becomes apparent from the itinerary subsection information data 6001-6002 and no price would have to be paid for the connection between station B to station C, since, according to the information from the itinerary subsection information data 6003, no transportation vehicle was used on this subsection. This result may be displayed by the output unit 1115 to the travelling object.

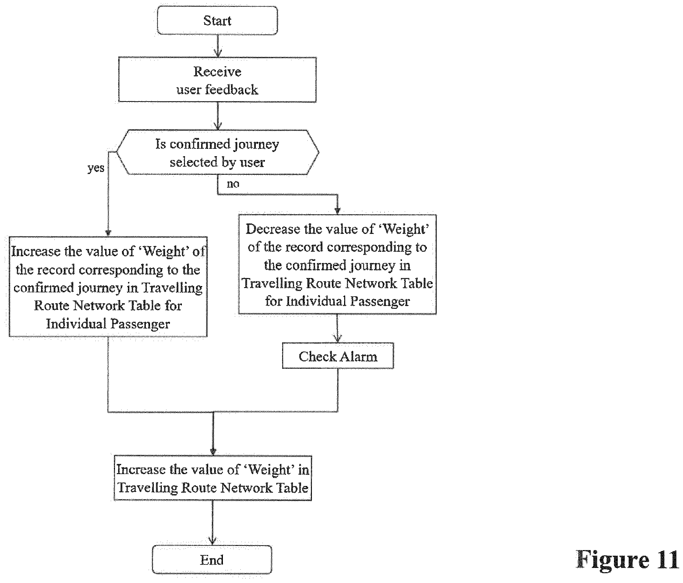

In a furthermore preferred aspect, an itinerary estimation unit 1114 is included in the apparatus 1100 which adds a further layer of fail-safety and reliability, especially when it comes to making sure that correct itineraries/subsections of itineraries are generated and possibly output by the output unit 1115. Specifically, a proposed configuration of the processing according to the itinerary estimation unit 1114 is shown by Fig. 11 which reads, in a first step (step A1), a first record from the itinerary history data 1105. In this example the first record read would be the itinerary subsection information data 6001 as shown by Fig. 7. Then, a decision is taken (step A2) as to whether the estimation value of said read itinerary subsection information, here, the one with reference sign 6001, has an estimation value which is below a predefined threshold. The threshold may be stored in a data storage of the apparatus 1100 or any other location. Assuming that, in the present example, the threshold would be lower than "100", the decision result would be "yes" for the record 6001 in the itinerary history data 1105. Thus, the next record would be read (step A6) which is the one with reference sign 6002 in Figure 7. The estimation value of this record is also above the threshold so that the next record, which has reference sign 6002 in the example of Figure 7, is read from the itinerary history data 1105. The itinerary subsection information data 6003, however, has an estimation value of "40" which is now assumed by way of example to be lower than the predefined threshold so that the decision (in step A2) will be "no". Accordingly, alternative itinerary subsection information data 6001-600n will be generated (step A3). The step of generating or finding an alternative includes further sub-steps (not shown) which may repeated in a loop as well. The sub-steps may include generating/finding all possible alternatives for other subsections which end or start at the start location or the end location of the actual itinerary subsection information data ("actual" in the very processing loop, e.g., the one with reference sign 6003 in the example of Figure 7) having the estimation value lower than the threshold. In the example of Fig. 7, this would include that the itinerary estimation unit 1114 searches the predetermined itinerary subsections 5000-500n as shown by the example of Fig. 6 and generates the (sets of) alternative itinerary subsection information data 6004 and 6005 of Fig. 7. This is done by finding that the predetermined subsections 5000-500n include one predetermined subsection with the identical start location of the dataset 6003 of Fig. 7, being the predetermined subsection information 5013 which connects station B with the end node "on-board" and which has the weight value "100". Further, the alternative itinerary subsection information data 6005 is found by the same end location as the itinerary subsection information data 6003, namely station C, so that the predetermined subsection information 5014 as shown by Fig. 6 in the network database 1103 can be used which connects the start node "on-board" with the end node station C. Both have the weight value "100" so that the estimation value "100" is entered for both of the two further (sets of) alternative itinerary subsection information data 6004 and 6005 in the example of Fig. 7. It is noted that the alternative subsection information data added by the itinerary estimation unit 1114 is not directly based on transmissions/data originating from sender nodes N received by the mobile computer 1200. However, these alternatives have a higher weight value, i.e. a higher probability that they are chosen by the travelling object, even though no signals/data have been received by the apparatus 1100 for these links/subsections. The reason for not having received data may lie in broken equipment or interrupted transmission paths. Furthermore, as a further safety option, the itinerary estimation unit 1114 may have an additional checking step (step A4). This step may determine whether the weight value of the generated alternative is above the threshold. The threshold may be the same or as the before discussed threshold. If this optional step A4 is included it depends on the result of the checking as to whether step A5 is carried out. Step A5 includes generating a new entry/record into the itinerary history data 1105.

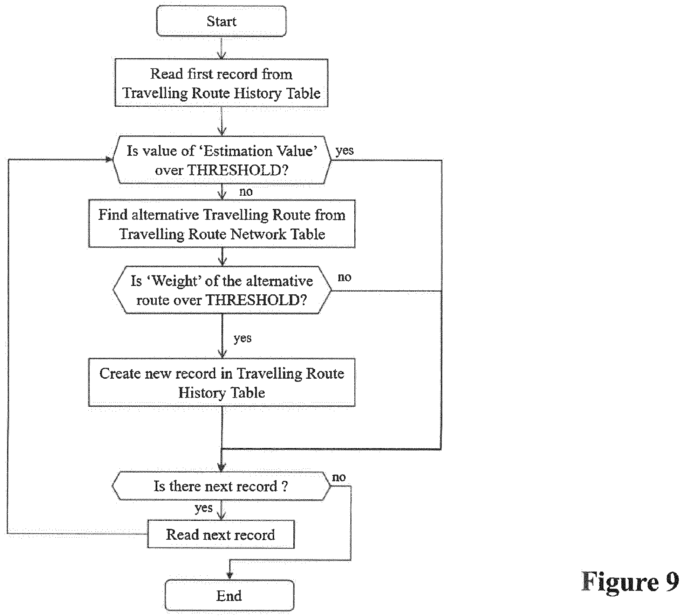

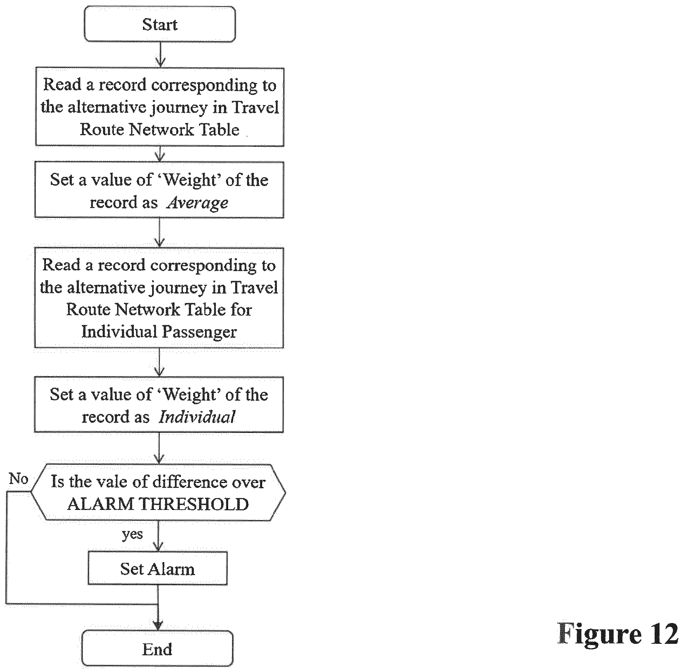

Especially in the preferred aspect/example which includes the itinerary generation unit 1113 and the itinerary estimation unit 1114, the output unit 1115 may proceed according to the configuration/method as shown in an example of Fig. 12. In this example, the generated itinerary history data 1105 is read record-by-record; i.e. in a first step (step B1), the first record is read and it is decided in a next step (step B2) as to whether the estimation value stored for the record is greater than the threshold and if this is true, this record is marked as a "confirmed journey" (step B3). The marking may for example be done by adding a temporary variable with this label or the like. If, however, the estimation value is below the threshold, it is checked (step B5) for the optionally provided properties of the itinerary subsection information, wherein the itinerary generation unit 1113 sets the property "actual" and the itinerary estimation unit 1114 sets the property "assumption". If these properties are set, it may now be checked (step B5) in the itinerary history data 1105 as to whether there is data which connects the same start and end location being marked with the property "assumption". If this is not the case, the decision is "no" and the record is marked as "confirmed journey" (step B3). If, however, there is an entry marked with "assumption", this entry is selected and marked as "confirmed journey" (step B6), while the before read record is marked as "alternative journey"/"alternative itinerary" (step B7). Then, the information is updated (step B4) and the next record is read (step B8). By a looped processing of all records of the itinerary history data 1105, the entire journey/itinerary from station A to station C in the here provided example can be determined with all subsections/itineraries in between. Since in the very specific example of Fig. 7 the entries having reference sign 6001 and 6002 have an estimation value of "100", which is assumed to be greater than the predefined threshold, these will be marked as "confirmed journey" and by an update information step (see Figure 11, step B4), these two subsections may be aggregated/be combined to one itinerary connecting station A with station B on board of a transportation vehicle, such as a bus or a railway or the like. This is shown by the example output displayed on the mobile computer 1200; see Fig. 9. Furthermore, it is displayed that this is a "confirmed journey". With regard to the connection from station B to station C, the specific flow of steps as shown by Fig. 12 will lead to the result that the record having estimation value "40" is marked as an "alternative journey" which is, however, not clearly definable as "confirmed journey" because the estimation value of "40" in the entry having reference sign 6003 is assumed to be below the preset threshold, which may be "70" or "80" in this example. Furthermore, since two "assumption" entries, having reference signs 6004 and 6005, are provided in the itinerary history data 1105 of Fig. 7 which connect station B with "on board" and "on board" with station C and which have an estimation value above the threshold, they are output as a aggregated "confirmed journey"; see Fig. 9. This is shown in the lower middle box of Fig. 9 which indicates that the apparatus 1100 assumes station B to station C was traveled by a transportation vehicle, such as a railway or a bus. However, alternatively, it is also indicating to the user of the mobile computer 1200 that station B to station C may have been travelled by alternative travel options, such as a vehicle or on foot or by a private car or the like.

Furthermore, as already discussed before, as a further preferred option, the price/fare of the itineraries can be displayed to the user of the mobile computer 1200 based on the data from the fare database 1106 and calculated by the fare calculation 1112 which compares the itinerary's subsections as provided by the itinerary history data 1105 to a fare table including travel start and end stations and the price. Furthermore, an account management unit 1111, which is shown by Fig. 2, can execute, based on account data 1101, that the fare is charged from the bank account, the credit card or any other payment option of the user with the respective ID.

In a further preferred aspect of the claimed subject matter, the interaction with the travelling object/user of the mobile computer 1200 may further be deepened by adding a travel route network update unit 1116 to the apparatus 1100 which is configured to receive a user entry/feedback data after the itineraries were output by the output unit 1115 as shown in Fig. 9, as an example. The method/the flow of steps is shown with an example included in Fig. 11. The feedback data may include information about the selected itinerary if alternatives are displayed. The feedback may be entered by the user into the mobile computer 1200, e.g. choosing/selecting between the confirmed and the alternative itinerary from station B to station C in the example of Fig. 9. If the user selects the displayed "confirmed journey" and transmits it as feedback (step C1), which would be the use of the transportation vehicle from station B to station C in the example of Fig. 9, a checking step (step C2) would be positive and the weight value of this selected journey would be increased in the itinerary network data of the individual passenger 1104 (step C3). Therefore, preferred options of specific users can be saved and can be promoted over time. However, if the checking step returns "no", i.e. the user has not confirmed/selected the "confirmed journey" and has selected an "alternative itinerary", the weight in the individual passenger's database 1104 is decreased (step C4). In addition, optionally an alarm (step C5) may be triggered which will be explained later. Furthermore, the weight value in the general itinerary network database 1103 is increased (step C6). This feedback function/itinerary network update unit 1116 allows learning of the apparatus 1100 to output increasingly precise itinerary proposals to the mobile computer 1200. The function/method as explained in this connection of modifying the weight value, may be preferably combined with other possibilities of modifying the weight which are not explicitly indicated or shown by the Figures and which include providing a further modification unit to the apparatus 1100 which changes the weight of predetermined itinerary subsections 5000-500n in dependency of conditions such as the weather, strikes, technical problems of public transportation, and the like.

As mentioned above, preferably the apparatus 1100 may include an alarm unit 1117, which may process the steps as shown by Fig. 12. This means that a record in the itinerary network data 1103 is read corresponding to the output "alternative itinerary/journey" (step C51). Then, temporarily, the respective value of the weight is saved (step C52), such as in a variable which may be named average or the like. Then, a record corresponding to said "alternative itinerary" is read from the individual database 1104 of the travelling object (step C53) and this weight value is set/stored in a variable, named such as "individual" (step C54). Then the two variables/the values temporarily stored therein are compared to each other (step C55) and if the difference value between these two is above a pre-set alarm threshold, an alarm is issued (step C56) which indicates that a user fraud has possibly happened, which may mean that the user has selected the "alternative itinerary" output, e.g. shown in Fig. 9, even though it was not the itinerary which he/she indeed has travelled. Therefore, safety and reliability are increased even further.

It is again noted that the above description and the Figures show examples which are less complex than in real application scenarios so that the general technical concept of the claimed subject matter can be quickly understood. The number of databases, data sets, users, etc. are assumed to be much higher as well as the nodes and subsections which may represent a real city, country or worldwide travelling options. The above preferred aspects and examples may be combined with each other if the person skilled in the art would not have to apply inventive activity.

Summarizing, a more reliable apparatus and system for generating an itinerary a travelling object has taken can be generated and informed to the user of a mobile computer 1200. A corresponding method and computer program product are described as well.

## Claims

1. An apparatus (1100) for generating an itinerary a travelling object has travelled comprising
- an input unit configured to receive location information data (3001..300n) from a mobile computer (1200) of said travelling object, wherein the location information data (3001..300n) contains data about a location of the mobile computer (1200) and a time at said location, and wherein the apparatus (1100) is configured to store a plurality of location information data (3001..300n) as location history data (1102);
- an itinerary network database (1103) which includes a weight value for each of a plurality of predetermined itinerary subsections (5001..500n);
- an itinerary generation unit (1113) which is configured to generate itinerary history data (1105) including a plurality of itinerary subsection information data (6001..600n), wherein each itinerary subsection information data (6001..600n) includes a start and an end location of a subsection of an itinerary determined based on the location history data (1102) and an estimation value determined based on the weight value included in the itinerary network database (1103); and
- an output unit (1115) which is configured to output at least one itinerary of the travelling object based on the itinerary subsection information data (6001..600n) of the itinerary history data (1105) and based on the weight value to the mobile computer (1200).

2. The apparatus according to claim 1, wherein each location information data (3001..300n) includes data about an identifier of the mobile computer (1200), a location of the mobile computer (1200) and a time at of the mobile computer (1200) at said location, and the data about the location of the mobile computer (1200) and the time at the location is generated based on a signal transmitted from a sender node (N) at said location to the mobile computer (1200).

3. The apparatus according to claim 1 or 2, wherein the itinerary generation unit (1113) is configured to select a first location information data with the lowest time from the location history data (1102), to set the location of the first location information data as a start location, to select a second location information data with the next lowest time and with a different location than said start location from the location history data (1102), to set the location of the second location information data as an end location, and to save said start location and said end location as a part of the itinerary subsection information data (6001..600n) of the itinerary history data (1105).

4. The apparatus according to at least one of claims 1 to 3, further comprising an itinerary estimation unit (1114) configured to generate, based on data from the itinerary network database (1103), additional itinerary history data (1105) including one or more alternative itinerary subsection information data (6001..600n) which are alternative information to itinerary subsection information data (6001..600n) generated by the itinerary generation unit (1113) having an estimation value that is lower than a predetermined threshold.

5. The apparatus according to at least one of claims 1 to 4, wherein the itinerary network database (1103) comprises a plurality of predetermined itinerary subsections (5001..500n) each of which include a start location, an end location and weight value; and
the itinerary generation unit (1113) is configured to select a weight value from the itinerary network database (1103) for an itinerary subsection information data (6001..600n) from the itinerary history data (1105) for which the start location and the end location match with the start location and the end location of a predetermined itinerary subsection (5001..500n) in the itinerary network database (1103), and wherein
the estimation value of said itinerary subsection information data (6001..600n) is the same as the selected weight value.

6. The apparatus according to at least one of claims 1 to 5, wherein the itinerary estimation unit (1114) is configured to add alternative itinerary subsection information data (6001..600n) to the itinerary history data (1105) by selecting one or more predetermined itinerary subsections (5001..500n) from the itinerary network database (1103) for which at least the start location or the end location of said itinerary subsection information data (6001..600n) generated by the itinerary generation unit (1113), which has an estimation value that is lower than a predetermined threshold, and of a predetermined itinerary subsection (5001..500n) of the itinerary network database (1103) match with each other, and if the weight value of the alternative itinerary subsection information is equal to or higher than said threshold.

7. The apparatus according to at least one of the preceding claims, wherein the itinerary generation unit (1113) and the itinerary estimation unit (1114) are configured to add a property value to the itinerary subsection information data (6001..600n), and
the itinerary generation unit (1113) sets "actual" as property value while the itinerary estimation unit (1114) sets "assumption" as property value.

8. The apparatus according to at least one of the preceding claims, wherein the output unit (1115) is configured to output itinerary subsection information data (6001..600n) from the itinerary history data (1105) as confirmed itinerary or as alternative itinerary.

9. The apparatus according to at least one of the preceding claims, wherein the output unit (1115) is configured to output at least one itinerary subsection information data (6001..600n) from the itinerary history data (1105) as a proposal itinerary to the mobile computer, and the input unit (1115) is configured to receive feedback data from the mobile computer about the agreement to the proposal itinerary, wherein
if the feedback data includes agreement the weight value in the itinerary network database (1103) is increased for the predetermined itinerary subsection matching with the proposal itinerary, and, otherwise, said weight value is decreased.

10. The apparatus according to claim 9, wherein an alarm unit (1117) is included which is configured to verify feedback data for a proposal itinerary which does not receive agreement, and to increase the weight value of the predetermined itinerary subsection matching with the proposal itinerary if the verification determines an agreement as correct.

11. The apparatus according to at least one of the preceding claims, wherein the weight value is modified based on a distance between a start location and an end location, a number and kind of travelling options between a start location and an end location, weather, and/or other circumstances.

12. The apparatus according to at least one of the preceding claims, wherein the apparatus may further include a fare database (1106) and a fare calculation unit (1112) configured to calculate a fare for each itinerary subsection information data (6001..600n) in the itinerary history data (1105) based on the data in the fare database (1106).

13. A system (1000) which includes the apparatus (1100) according to at least one of claims 1 to 12, a mobile computer (1200) and a plurality of sender nodes (N) arranged along travelling routes and/or within transportation vehicles, wherein
the sender nodes (N) are configured to send data to the mobile computer (1200).

14. Method for generating an itinerary a travelling object has travelled comprising:
- receiving location information data (3001..300n) from a mobile computer (1200) of said travelling object, wherein the location information data (3001..300n) contains data about a location of the mobile computer (1200) and a time at said location, and storing a plurality of the location information data (3001..300n) as location history data (1102);
- generating itinerary history data (1105) including a plurality of itinerary subsection information data (6001..600n), wherein each itinerary subsection information data (6001..600n) includes a start and an end location of a subsection of an itinerary determined based on the location history data (1102) and an estimation value determined based on a weight value from an itinerary network database (1103); and
- outputting at least one itinerary based on the itinerary subsection information data (6001..600n) of the itinerary history data (1105) and based on the weight value to the mobile computer.

15. A computer program product storable in a memory comprising instructions which, when carried out by a computer, cause the computer to perform the method according to claim 14.
